# EUROPEAN PATENT SPECIFICATION

(11) **EP 1 959 117 B1**
(45) Date of publication and mention of the grant of the patent: **03.11.2010**
(21) Application number: 06834846.5
(22) Date of filing: 11.12.2006
(51) Int. Cl.: F02D 17/00, F02B 37/00, F02D 9/02, F02D 23/00, F02M 25/07

(54) **EXHAUST GAS PURIFICATION SYSTEM FOR INTERNAL COMBUSTION ENGINE**
ABGASREINIGUNGSSYSTEM FÜR EINEN VERBRENNUNGSMOTOR
SYSTEME D EPURATION DE GAZ D ECHAPPEMENT POUR MOTEUR A COMBUSTION INTERNE

(30) Priority: 09.12.2005 JP 2005356622
(43) Date of publication of application: 20.08.2008
(73) Proprietor: Toyota Jidosha Kabushiki Kaisha, Toyota-shi, Aichi-ken, 471-8571 (JP)
(72) Inventor: YAMASHITA, Akira, Aichi 471-8571 (JP)
(74) Representative: Intes, Didier Gérard André
(86) International application number: PCT/JP2006/325119
(87) International publication number: WO 2007/066833

(56) References cited:
- EP-A- 1 193 388
- JP-A- 60 013 934
- JP-A- 61 016 238
- JP-A- 61 016 238
- JP-A- 61 087 928
- JP-A- 2000 120 450
- JP-A- 2001 182 590
- JP-A- 2002 106 398

## Description

### TECHNICAL FIELD

The present invention relates to an exhaust purification system with an exhaust gas recirculation system for an internal combustion engine.

### BACKGROUND ART

Japanese Patent Application Publication No. JP-A-2002-106398 discloses a low-pressure EGR system in which part of exhaust gas flowing downstream of a turbine of a turbocharger is recirculated to an intake passage upstream of a compressor of the turbocharger.

### DISCLOSURE OF THE INVENTION

In an exhaust purification system with a low-pressure EGR system, the ratio of an amount of exhaust gas entering the intake passage by the low-pressure EGR system ("low-pressure EGR gas" hereafter) to an amount of new air entering the intake passage can be controlled by a throttle valve which is disposed upstream of a low-pressure EGR gas inlet of the intake passage.

If air is drawn into combustion chambers when an internal combustion engine is stopped, the work of compression by pistons and the like, may cause noise and vibration. To avoid this, the throttle valve is typically closed when the internal combustion engine is stopped.

However, as a region of the intake passage downstream of the throttle valve in which a turbocharger and an intercooler are disposed has a large volume, it is difficult to immediately reduce the amount of air drawn into the combustion chambers even after the closure throttle valve. EP 1 193 388 deals with the problem.

The present invention has been made in view of the foregoing problems and has an object to provide a technique that enables to damp the noise and vibration at the stoppage of an internal combustion engine, in an exhaust purification system having a low-pressure EGR system which recirculates part of the exhaust gas flowing downstream of a turbine of a turbocharger into an intake passage upstream of a compressor of the turbocharger.

To achieve the above object, an exhaust purification system for an internal combustion engine as defined by the claims is provided. Specifically, the exhaust purification system for the internal combustion engine according to the present invention includes: a turbocharger including a turbine disposed in an exhaust passage of the internal combustion engine and a compressor disposed in an intake passage of the internal combustion engine; an EGR passage for recirculating part of exhaust gas flowing in the exhaust passage downstream of the turbine into the intake passage upstream of the compressor; a first throttle valve disposed in the intake passage downstream of the compressor, the first throttle valve adjustably opening and closing the intake passage; a second throttle valve disposed in the intake passage upstream of an inlet at which the exhaust gas is recirculated to the intake passage through the EGR passage, the second throttle valve adjustably opening and closing the intake passage; a blowby gas pipe connected to said intake passage upstream of said compressor and downstream of said second throttle valve, said blowby gas pipe leading blowby gas to said intake passage, and a control means for, when the internal combustion engine is stopped, causing the first throttle valve to close with the second throttle valve open, wherein the control means cause the second throttle valve to be opened to a degree at which a pressure is developed in the intake passage downstream of the second throttle valve and under the pressure the blowby gas is not sucked into the intake passage downstream of the second throttle valve from the blowby gas pipe, when the first throttle valve is closed.

According to the present invention, since the first throttle valve is closed when the internal combustion engine is brought to a stop, the amount of air drawn into the combustion chambers is limited to the amount of the residual air in the intake passage downstream of the first throttle valve. This reduces the amount of air drawn into the combustion chambers and thus damps the noise and vibration generated at the stoppage of the internal combustion engine.

Furthermore, in the exhaust purification system according to the present invention, the first throttle valve is controlled to close when the second throttle valve is open, such that a region of the intake passage subjected to a negative pressure by the closure of the first throttle valve is limited to a small region downstream of the first throttle valve.

In other words, development of the negative pressure in the region of the intake passage upstream of the first throttle valve, in which an intercooler, the turbocharger, a blowby gas inlet, and the like are disposed, is suppressed. As a result, the lubricant in the turbocharger and the blowby gas in a blowby gas pipe are not drawn into the intake passage by the negative pressure in the intake passage, which in turn prevents oil and the like from adhering to or being deposited on the walls of an intake system including the intercooler.

Depending on the operational state of the internal combustion engine or the exhaust gas recirculation ("EGR" hereafter), it is possible that the degree of opening of the second throttle valve is small at the issuance of a request to stop the internal combustion engine. For example, since the degree of opening of the second throttle valve is controlled during the EGR is performed in order to adjust the ratio of the intake air to the EGR gas, the degree of opening of the second throttle valve may be held small if EGR has been performed immediately before the stoppage of the internal combustion engine.

In view of that, when the internal combustion engine is stopped, the first throttle valve may be closed after the second throttle valve has been opened to a degree at which no negative pressure is created downstream of the second throttle valve. In this way, even if the degree of opening of the second throttle valve is small at the issuance of the request to stop the internal combustion engine, development of the negative pressure can be more reliably suppressed in the region of the intake passage upstream of the first throttle valve, in which the intercooler, the turbocharger, the blowby gas inlet, and the like are disposed.

### BRIEF DESCRIPTION OF THE DRAWINGS

FIG. 1 is a view illustrating a schematic constitution of an internal combustion engine according to an embodiment of the present invention.
FIG. 2 is a flowchart showing a routine for controlling a first throttle valve and a second throttle valve when the internal combustion engine is stopped according to the embodiment of the present invention.

### BEST MODES FOR CARRYING OUT THE INVENTION

Hereinafter, the best modes for carrying out the present invention will be illustratively described in detail with reference to the drawings.

### First Embodiment

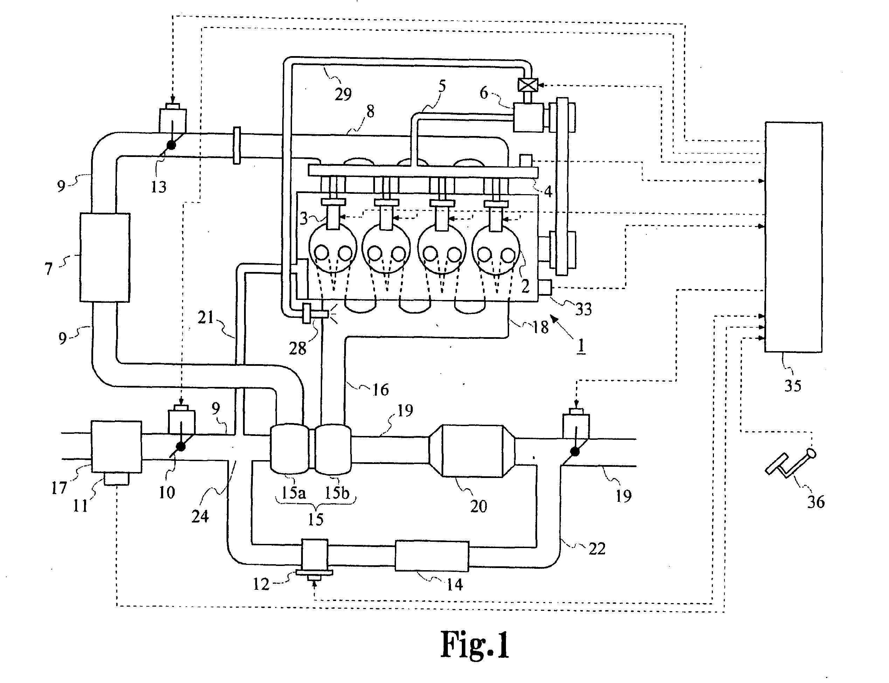

FIG. 1 schematically shows one embodiment of an internal combustion engine to which the present invention is applied. The internal combustion engine 1 shown in FIG. 1 is a diesel engine with four cylinders 2. The internal combustion engine 1 includes fuel injection valves 3 for directly injecting fuel into the respective combustion chambers of the cylinders 2.

An intake manifold 8 is connected to the internal combustion engine 1 such that each branch of the intake manifold 8 is in communication with the combustion chamber of each cylinder 2 via an intake port. An intake pipe 9 is connected to the intake manifold 8 and a first throttle valve 13 is disposed in the proximity of the joint between the intake pipe 9 and the intake manifold 8. The first throttle valve 13 adjustably opens and closes the intake pipe 9. The degree of opening of the first throttle valve 13 is controlled by an ECU 35 in accordance with the operational state of the internal combustion engine 1. The first throttle valve 13 corresponds to the first throttle valve of the present invention.

An intercooler 7 is disposed in the intake pipe 9 upstream of the first throttle valve 13. The intercooler 7 cools the intake air flowing in the intake pipe 9. Disposed in the intake pipe 9 upstream of the intercooler 7 is a compressor housing 15a of a turbocharger 15 that is driven by the exhaust gas as its energy source. Connected to the intake pipe 9 upstream of the compressor housing 15a is a blowby gas pipe 21 that leads blowby gas generated in the internal combustion engine 1 to the intake pipe 9.

An exhaust manifold 18 is connected to the internal combustion engine 1 such that each branch of the exhaust manifold 18 is in communication with the combustion chamber of each cylinder 2 via an exhaust port. Disposed on the exhaust manifold 18 is a fuel addition valve 28 with the injection nozzle located inside the exhaust manifold 18. The exhaust manifold 18 is connected via a collecting pipe 16 to a turbine housing 15b of the turbocharger 15. The turbine housing 15b is in turn connected to an exhaust pipe 19 that is in communication with the atmosphere further downstream.

A NOₓ catalyst 20 of storage-reduction type is disposed partway in the exhaust pipe 19. The NOₓ catalyst 20 cleans inflowing exhaust gas by storing the NOₓ in the exhaust gas when the exhaust gas has a high concentration of oxygen. When inflowing exhaust gas has a low concentration of oxygen, the NOₓ catalyst 20 releases the NO^{x} stored therein. When the NOₓ is released from the NOₓ catalyst 20, if fuel or some other reduction component is present around the NOₓ catalyst 20, the fuel reduces the NOₓ released from the NOₓ catalyst 20, thus cleaning the exhaust gas. This NOₓ clean-up in the NOₓ catalyst 20 is carried out by the supply of the fuel added to the exhaust gas from the fuel addition valve 28 to the NOₓ catalyst 20 through the exhaust pipe 19 together with the exhaust gas.

Although a NOₓ catalyst of storage-reduction type is described herein as an exemplary exhaust purification system disposed partway in the exhaust pipe 19, a different type of exhaust purification system, such as a NOₓ catalyst of selective reduction type, a particulate filter, or a combination thereof may be used.

Connected to the exhaust pipe 19 downstream of the NOₓ catalyst 20 is one end of a low-pressure EGR pipe 22 that recirculates part of the exhaust gas flowing through the exhaust pipe 19 to the intake pipe 9. The other end of the low-pressure EGR pipe 22 is connected to a low-pressure EGR gas inlet 24 positioned upstream of the compressor housing 15a in the intake pipe 9.

A low-pressure EGR cooler 14 and a low-pressure EGR valve 12 are disposed partway in the low-pressure EGR pipe 22. The low-pressure EGR cooler 14 cools the exhaust gas flowing through the low-pressure EGR pipe 22 ("low-pressure EGR gas" hereafter). The low-pressure EGR valve 12 controls the flow rate of the low pressure EGR gas as its degree of opening is controlled by the ECU 35 in accordance with the operational state of the internal combustion engine 1.

A second throttle valve 10 is disposed in the intake pipe 9 upstream of the low-pressure EGR gas inlet 24 and the blowby gas pipe 21. The second throttle valve 10 adjustably opens and closes the intake pipe 9. Since the ECU 35 controls the degree of opening of the second throttle valve 10 in accordance with the operational state of the internal combustion engine 1, the second throttle valve 10 can control the ratio of the amount of new air flowing in through an air cleaner 17 provided upstream of the second throttle valve 10 to the amount of low-pressure EGR gas flowing into the intake pipe 9 from the low-pressure EGR pipe 22. The second throttle valve 10 corresponds to the second throttle valve of the present invention.

The combustion temperature of the fuel in the combustion chambers is reduced by the recirculation of part of the exhaust gas to the intake system of the internal combustion engine 1 through the low-pressure EGR pipe 22. This decreases the amount of NOₓ produced in the combustion process and thus the amount of NOₓ in the exhaust gas emitted from the internal combustion engine 1.

The ECU 35 is an electronic control computer including a ROM, a RAM, a CPU. an input port, and an output port, which are interconnected via a bidirectional bus. The ECU 35 controls the degree of openings of the first throttle valve 13 and the second throttle valve 10 as well as performs known basic control, such as control of the amount of fuel injected by the fuel injection valves 3, the amount of fuel addition by the fuel addition valve 28, and the degree of opening of the low-pressure EGR valve 12.

The following describes the control of the degree of opening of the first throttle valve 13 and the second throttle valve 10 performed by the ECU 35 when the internal combustion engine 1 is stopped in the exhaust purification system for the internal combustion engine structured as described above.

In response to an engine stop request, for example, from the driver, the ECU 35 controls the fuel injection valves 3 to stop the fuel injection into the combustion chambers. During the stoppage, the air located in the intake manifold 8 and the intake pipe 9, which are in communication with the intake ports of the combustion chambers, continues to be drawn into the combustion chambers by the piston action until the pistons come to a complete standstill in the cylinders. If an excessive amount of air is drawn in, that may result in noise and vibration in the internal combustion engine 1. Accordingly, one effective measure to reduce such noise and vibration is to block the intake pipe 9 in order to reduce the amount of air drawn into the combustion chambers at the stoppage of the internal combustion engine 1.

At this stage, in a conventional exhaust purification system without a first throttle valve 13, the second throttle valve 10 is closed. Following the closure of the second throttle valve 10, however, the air in the large region of the intake pipe 9 that includes the intercooler 7. the compressor housing 15a, the connection portion of the blowby gas pipe 21, and the low-pressure EGR gas inlet 24, which are disposed downstream of the second throttle valve 10, is drawn into the combustion chambers. Accordingly, this hinders the effect of noise and vibration reduction in the internal combustion engine 1 at the stoppage, despite the closure of the second throttle valve 10.

Moreover, if the residual air in the intake pipe 9 downstream of the second throttle valve 10 is drawn into the combustion chambers, a negative pressure develops in the intake pipe 9, which may in turn draw the lubricant in the turbocharger 15 and the blowby gas in the blowby gas pipe 21 into the intake pipe 9. If this happens, oil may be trapped in the intercooler 7 or adhere to the inner wall of the intake pipe 9.

Conversely, since this embodiment includes the first throttle valve 13, when the first throttle valve 13 is closed at the stoppage of the internal combustion engine 1, the amount of air sucked into the combustion chambers following the request to stop the internal combustion engine 1 is limited to the residual air in the small region downstream of the first throttle valve 13. This reduces the amount of air sucked into the combustion chambers following the request to stop the internal combustion engine I as compared to that due to the closure of the second throttle valve 10. Accordingly, the noise and vibration in the internal combustion engine 1 can be damped with greater reliability at the stoppage of the engine 1.

Furthermore, since the second throttle valve 10 opens before the first throttle valve 13 is closed, the region of the intake pipe 9 subjected to the negative pressure created by the residual air in the intake pipe 9 being drawn into the combustion chambers at the stoppage of the internal combustion engine 1 is limited to the region of the intake pipe 9 downstream of the first throttle valve 13. This suppresses development of the negative pressure in the region of the intake pipe 9 in which are disposed the engine components, such as the compressor housing 15a and the connection portion of the blowby gas pipe 21, from which the oil and the like may be sucked by such a negative pressure. This results in prevention of various problems resulting from oil and the like drawn into the intake pipe 9.

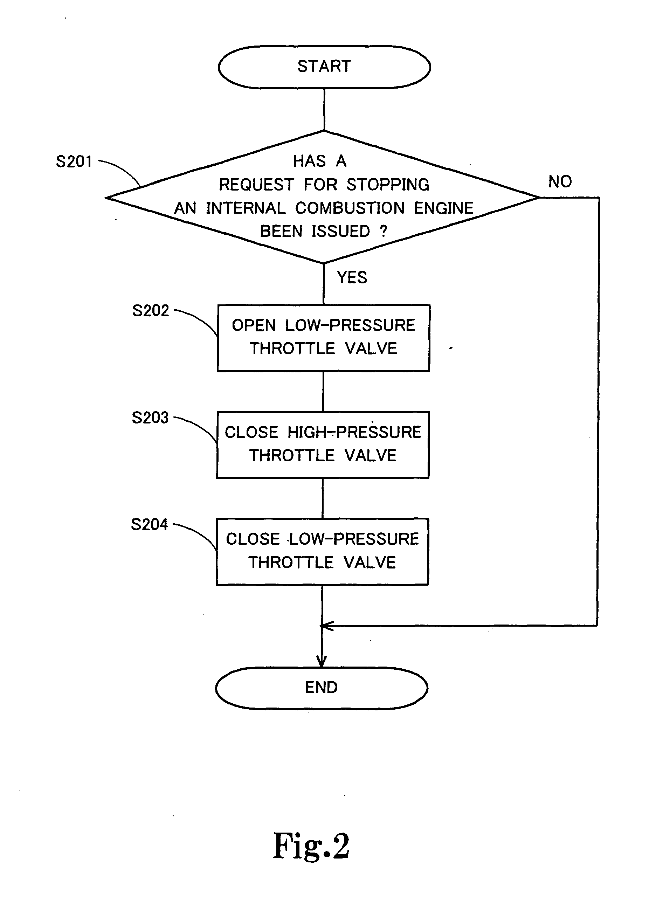

The following describes, with reference to FIG. 2, the control performed by the ECU 35 to open and close the first throttle valve 13 and the second throttle valve 10 at the stoppage of the internal combustion engine 1. FIG. 2 is a flowchart showing a routine for controlling the opening and closing of the first throttle valve 13 and the second throttle valve 10. This routine is repeatedly executed by the ECU 35 at predetermined intervals.

Initially, at Step S201, the ECU 35 determines whether or not the request to stop the internal combustion engine I has been issued. If it is determined YES at Step S201, the ECU 35 proceeds to Step S202. Conversely, if it is determined NO at Step S201, the ECU 35 terminates the execution of this routine.

At Step S202, the ECU 35 causes the second throttle valve 10 to open. Preferably, the second throttle valve 10 is substantially fully opened at this step. This is because the region of the intake pipe 9 downstream of the second throttle valve 10 has a tendency to develop the negative pressure. This is also because the region of the intake pipe 9 downstream of the second throttle valve 10 may easily fall into the negative pressure especially if the second throttle valve 10 is controlled to be even slightly less than completely open, depending on the operational state of the internal combustion engine 1 and the flow state of the low-pressure EGR gas or the intake air at the issuance of the request to stop the internal combustion engine 1.

In a diesel engine, the sealing mechanism against the lubricant in the turbocharger 1 is typically designed to have a high degree of sealing in the positive pressure direction, whereas the mechanism may not provide sufficient sealing against suction created by the negative pressure. The above-described control of causing the second throttle valve 10 to be substantially fully open at Step S202 more reliably suppresses the development of the negative pressure in the region of the intake pipe 9 downstream of the second throttle valve 10 and thus the suction of oil into the intake pipe 9 as well.

At Step S203, the ECU 35 causes the first throttle valve 13 to close. Since this prevents intake air from flowing into the intake manifold 8, the amount of airflow into the combustion chambers is reduced after the request to stop the internal combustion engine 1 is issued. This immediately stops the internal combustion engine 1 as well as damps the noise and vibration at the stoppage of the internal combustion engine 1.

the ECU 35 causes the second throttle valve 10 to close at Step S204 and subsequently terminates this routine. This blocks airflow into the entire intake system of the internal combustion engine 1 when the internal combustion engine 1 is stopped, thus enabling more stable stroke termination of the internal combustion engine I while suppressing noise, vibration, and the like at the stoppage of the internal combustion engine 1.

Note that the above-described embodiment is merely an example to illustrate the present invention. Thus, various modifications can be made in the foregoing embodiment without departing from the scope of the present invention. For example, although the foregoing embodiment illustrates the exhaust purification system provided only with the low-pressure EGR passage, it is possible to apply the present invention to an exhaust purification system that has, in addition to the low-pressure EGR passage, a conventional EGR passage (a high-pressure EGR passage) having an exhaust manifold and an intake manifold in communication with each other. In that case, in order to control the ratio of the amount of high-pressure EGR gas to the amount of new air, a throttle valve is disposed in an intake manifold upstream of the point to which a high-pressure EGR passage is connected. Accordingly, performing the same control on this throttle valve as that on the first throttle valve of the present invention produces the same effects unique to the present invention as produced by the foregoing embodiment.

Moreover, the foregoing embodiment illustrates an exemplary control to ensure that when the internal combustion engine 1 is stopped, the second throttle valve is opened before the first throttle valve is closed. However, the manner of control is not limited to that of the foregoing embodiment as long as it is ensured that the first throttle valve is controlled to close while the second throttle valve is open. For example, similar effects to those of the foregoing embodiment can be obtained by controlling the first throttle valve to close when a condition is satisfied that the second throttle valve is opened at least to a predetermined degree. This predetermined degree of opening corresponds to the minimum value at which no negative pressure develops downstream of the second throttle valve.

### INDUSTRIAL APPLICABILITY

According to the present invention, the noise and vibration in an internal combustion engine can be diminished at the stoppage by employing an exhaust purification system including an EGR passage for recirculating part of exhaust gas flowing downstream of a turbine of a turbocharger into an intake passage upstream of a compressor of the turbocharger.

## Claims

1. An exhaust purification system for an internal combustion engine (1), comprising:
a turbocharger (15) including a turbine disposed in an exhaust passage (19) of said internal combustion engine (1) and a compressor disposed in an intake passage (9) of said internal combustion engine (1);
an EGR passage (22) for recirculating part of exhaust gas flowing in said exhaust passage downstream of said turbine into said intake passage (9) upstream of said compressor;
a first throttle valve (13) disposed in said intake passage (9) downstream of said compressor, said first throttle valve (13) adjustably opening and closing said intake passage (9);
a second throttle valve (10) disposed in said intake passage (9) upstream of an inlet (24) at which said exhaust gas is recirculated to said intake passage (9) through said EGR passage (22), said second throttle valve (10) adjustably opening and closing said intake passage (9); **characterized in that** it further comprises:
a blowby gas pipe (21) connected to said intake passage (9) upstream of said compressor and downstream of said second throttle valve (10), said blowby gas pipe (21) leading blowby gas to said intake passage (9), and
a control means for, when said internal combustion engine (1) is stopped, causing said first throttle valve (13) to close with said second throttle valve (10) open,
wherein said control means cause said second throttle valve (10) to be opened to a degree at which a pressure is developed in said intake passage (9) downstream of said second throttle valve (10) and under said pressure said blowby gas is not sucked into said intake passage (9) downstream of the second throttle valve (10) from said blowby gas pipe (21), when said first throttle valve (13) is closed.

2. The exhaust purification system for an internal combustion engine (1) according to claim 1, **characterized in that** when said internal combustion engine (1) is stopped, said control means causes said first throttle valve (13) to close with said second throttle valve (10) open to a larger degree than that before said internal combustion engine (1) is stopped.

3. The exhaust purification system for an internal combustion engine (1) according to claim 1 or 2, **characterized in that** when said internal combustion engine (1) is stopped, said control means causes said first throttle valve (13) to close after causing said second throttle valve (10) to open.

4. The exhaust purification system for an internal combustion engine (1) according to claim 1 or 2, **characterized in that** when said internal combustion engine (1) is stopped, said control means causes said first throttle valve (13) to close after causing said second throttle valve (10) to open, and, thereafter said control means causes said second throttle valve (10) to close.

5. The exhaust purification system for an internal combustion engine (1) according to any one of claims 1 to 4, **characterized in that** a degree of opening of said second throttle valve (10), which is caused to open by said control means when said internal combustion engine (1) is stopped, is fully opened degree

## Patentansprüche

1. Abgasreinigungssystem für einen Verbrennungsmotor (1), umfassend:
einen Turbolader (15), welcher eine Turbine, die in einem Abgaskanal (19) des Verbrennungsmotors (1) angeordnet ist, und einen Verdichter umfaßt, der in einem Ansaugkanal (9) des Verbrennungsmotors (1) angeordnet ist,
einen AGR-Kanal (22) zum Rückführen eines Teils des Abgases, welches im Abgaskanal stromabwärts der Turbine strömt, in den Ansaugkanal (9) stromaufwärts des Verdichters,
ein erstes Drosselventil (13), welches im Ansaugkanal (9) stromabwärts des Verdichters angeordnet ist, wobei das erste Drosselventil (13) einstellbar den Ansaugkanal (9) öffnet und schließt,
ein zweites Drosselventil (10), welches im Ansaugkanal (9) stromaufwärts eines Einlasses (24) angeordnet ist, bei dem das Abgas in den Ansaugkanal (9) durch den AGR-Kanal (22) rückgeführt wird, wobei das zweite Drosselventil (10) einstellbar den Ansaugkanal (9) öffnet und schließt, **dadurch gekennzeichnet, daß** es des weiteren umfaßt:
ein Leckgasrohr (21), welches mit dem Ansaugrohr (9) stromaufwärts des Verdichters und stromabwärts des zweiten Drosselventils (10) verbunden ist, wobei das Leckgasrohr (21) das Leckgas zum Ansaugkanal (9) leitet, und
ein Steuermittel, um, wenn der Verbrennungsmotor (1) angehalten wird, das erste Drosselventil (13) zu schließen, während das zweite Drosselventil (10) offen bleibt,
wobei das Steuermittel das zweite Drosselventil (10) in einem Ausmaß offen läßt, bei welchem ein Druck im Ansaugkanal (9) stromabwärts des zweiten Drosselventils (10) entwickelt wird, und wobei unter dem Druck das Leckgas nicht in den Ansaugkanal (9) stromabwärts des zweiten Drosselventils (10) aus dem Leckgasrohr (21) angesaugt wird, wenn das erste Drosselventil (13) geschlossen wird.

2. Abgasreinigungssystem für einen Verbrennungsmotor (1) gemäß Anspruch 1, **dadurch gekennzeichnet, daß**, wenn der Verbrennungsmotor (1) angehalten wird, das Steuermittel das erste Drosselventil (13) schließen läßt, während das zweite Drosselventil (10) in einem größeren Ausmaß offen ist als jenes, bevor der Verbrennungsmotor (1) angehalten wird.

3. Abgasreinigungssystem für einen Verbrennungsmotor (1) gemäß Anspruch 1 oder 2, **dadurch gekennzeichnet, daß**, wenn der Verbrennungsmotor (1) angehalten wird, das Steuermittel das erste Drosselventil (13) schließen läßt, nachdem es das zweite Drosselventil (10) veranlaßt hat, sich zu öffnen.

4. Abgasreinigungssystem für einen Verbrennungsmotor (1) gemäß Anspruch 1 oder 2, **dadurch gekennzeichnet, daß**, wenn der Verbrennungsmotor (1) angehalten wird, das Steuermittel das erste Drosselventil (13) schließen läßt, nachdem es das zweite Drosselventil (10) veranlaßt hat, sich zu öffnen, und daß danach das Steuermittel das zweite Steuerventil (10) schließen läßt.

5. Abgasreinigungssystem für einen Verbrennungsmotor (1) gemäß jedem der Ansprüche 1 bis 4, **dadurch gekennzeichnet, daß** ein Öffnungsausmaß des zweiten Drosselventils (10), welches durch das Steuermittel veranlaßt wird, sich zu öffnen, wenn der Verbrennungsmotor (1) angehalten wird, das vollständig geöffnete Ausmaß ist.

## Revendications

1. Système de purification d'échappement pour un moteur à combustion interne (1), comprenant :
un turbocompresseur (15) incluant une turbine disposée dans un conduit (19) d'échappement dudit moteur à combustion interne (1) et un compresseur disposé dans un conduit (9) d'admission dudit moteur à combustion interne (1) ;
un conduit (22) de recyclage des gaz d'échappement (EGR pour "Exhaust Gas Recirculation") destiné à recycler, dans ledit conduit (9) d'admission en amont dudit compresseur, une partie des gaz d'échappement s'écoulant dans ledit conduit d'échappement en aval de ladite turbine ;
un premier papillon des gaz (13) disposé dans ledit conduit (9) d'admission en aval dudit compresseur, ledit premier papillon des gaz (13) ouvrant et fermant de façon réglable ledit conduit (9) d'admission ;
un seconde papillon des gaz (10) disposé dans ledit conduit (9) d'admission en amont d'un orifice d'entrée (24) au niveau duquel est recyclé le gaz d'échappement vers ledit conduit (9) d'admission par ledit conduit (22) d'EGR, ledit second papillon des gaz (10) ouvrant et fermant de façon réglable ledit conduit (9) d'admission ; **caractérisé en ce qu'**il comprend en outre :
un tuyau (21) de gaz de soufflage raccordé audit conduit (9) d'admission en amont dudit compresseur et en aval dudit second papillon des gaz (10), ledit tuyau (21) de gaz de soufflage conduisant du gaz de soufflage audit conduit (9) d'admission ; et
un moyen de commande destiné, lorsque ledit moteur à combustion interne (1) est arrêté, à faire que ledit premier papillon des gaz (13) se ferme avec ledit second papillon des gaz (10) ouvert,
dans lequel ledit moyen de commande fait que ledit second papillon des gaz (10) s'ouvre jusqu'à un degré où une pression se développe dans ledit conduit (9) d'admission en aval dudit second papillon des gaz (10) et sous laquelle dite pression ledit gaz de soufflage n'est pas aspiré dudit tuyau (21) de gaz de soufflage dans ledit conduit (9) d'admission en aval du second papillon des gaz (10), lorsque ledit premier papillon des gaz (13) est fermé.

2. Système de purification d'échappement pour un moteur à combustion interne (1) selon la revendication 1, **caractérisé en ce que**, lorsque ledit moteur à combustion interne (1) est arrêté, ledit moyen de commande fait que ledit premier papillon des gaz (13) se ferme avec ledit second papillon des gaz (10) ouvert jusqu'à un degré plus grand qu'avant que ledit moteur à combustion interne (1) soit arrêté.

3. Système de purification d'échappement pour un moteur à combustion interne (1) selon la revendication 1 ou 2, **caractérisé en ce que**, lorsque ledit moteur à combustion interne (1) est arrêté, ledit moyen de commande fait que ledit premier papillon des gaz (13) se ferme après avoir fait que ledit second papillon des gaz (10) s'ouvre.

4. Système de purification d'échappement pour un moteur à combustion interne (1) selon la revendication 1 ou 2, **caractérisé en ce que**, lorsque ledit moteur à combustion interne (1) est arrêté, ledit moyen de commande fait que ledit premier papillon des gaz (13) se ferme après avoir fait que ledit second papillon des gaz (10) s'ouvre, et **en ce qu'**après cela ledit moyen de commande fait que ledit second papillon des gaz (10) se ferme.

5. Système de purification d'échappement pour un moteur à combustion interne (1) selon l'une quelconque des revendications 1 à 4, **caractérisé en ce que** le degré d'ouverture dudit second papillon des gaz (10), dont ledit moyen de commande fait qu'il s'ouvre lorsque ledit moteur à combustion interne (1) est arrêté, est le degré complètement ouvert.
